# EUROPÄISCHE PATENTANMELDUNG

(11) **EP 2 063 200 A1**
(43) Veröffentlichungstag der Anmeldung: **27.05.2009**
(21) Anmeldenummer: 07022664.2
(22) Anmeldetag: 22.11.2007
(51) Int. Cl.: F24J 2/54, F16H 15/12

(54) **Zweiachsantriebsanordnung**

(71) Anmelder: Siemens Geared Motors GmbH, 72072 Tübingen (DE)
(72) Erfinder: Kunert, Jens, 72070 Tübingen (DE); Schnurr, Wolfgang, 72147 Nehren (DE); Böing, Georg, 72108 Rottenburg (DE)
(74) Vertreter: Kohler Schmid Möbus

(57) **Zusammenfassung**

Bei einer Zweiachsantriebsanordnung (10) zum Halten und Bewegen großer Sonnenlicht absorbierender, bündelnder oder reflektierender Flächen um eine Azimutachse (15) und eine Elevationsachse (20), wobei ein erstes durch einen ersten Antrieb (12) angetriebenes Getriebe für eine Drehbewegung um die Azimutachse (15) und ein zweites durch einen zweiten Antrieb (16) angetriebenes Getriebe für eine Drehbewegung um die Elevationsachse (20) vorgesehen sind, weist zumindest ein Getriebe eine Stirnradgetriebestufe mit konischer Stirnradverzahnung auf, und ist die zugeordnete Welle entlang ihrer Längsachse verstellbar. Dadurch wird eine hohe Genauigkeit erreicht.

## Beschreibung

Die Erfindung betrifft eine Zweiachsantriebsanordnung zum Halten und Bewegen von Sonnenlicht absorbierenden, bündelnden oder reflektierenden Flächen um eine Azimutachse und eine Elevationsachse, wobei ein erstes durch einen ersten Antrieb angetriebenes Getriebe für eine Drehbewegung um die Azimutachse und ein zweites durch einen zweiten Antrieb angetriebenes Getriebe für eine Drehbewegung um die Elevationsachse vorgesehen sind.

Solarkraftwerke arbeiten nach unterschiedlichen Prinzipien. Beispielsweise sind so genannte Parabolrinnen-Kraftwerke, Turm-Kraftwerke und Fotovoltaik-Kraftwerke bekannt. Bei allen diesen Kraftwerken müssen größere Flächen, beispielsweise große Spiegelflächen, Photovoltaikmodule, Fresnell-Module etc. bewegt werden. Diese Flächen müssen dem Sonnenstand mit einer hohen Genauigkeit nachgeführt werden, da schon geringste Positionsabweichungen zu einem schlechteren Wirkungsgrad führen. Insbesondere müssen die dafür vorgesehenen Antriebe mit einer Genauigkeit < 1 mrad arbeiten können. Aufgrund der großen Flächen, beispielsweise im Bereich von 20 - 40 m², müssen die Antriebe auch eine große Stabilität und Steifigkeit gegenüber Windkräften aufweisen, da aufgrund von Windkräften eine möglichst geringe Positionsabweichung auftreten soll.

Aufgabe der vorliegenden Erfindung ist es, eine Zweiachsantriebsanordnung bereitzustellen, die den oben genannten Anforderungen genügt, insbesondere eine Einstellung der Genauigkeit ermöglicht.

Gelöst wird diese Aufgabe auf ebenso überraschende wie einfache Art und Weise durch eine Zweiachsantriebsanordnung der eingangs genannten Art, bei der zumindest eines der Getriebe eine Stirnradgetriebestufe mit konischer Stirnradverzahnung aufweist und die zugeordnete Welle entlang ihrer Längsachse verstellbar ist. Dadurch kann das Zahnflankenspiel eingestellt werden, somit die Präzision erhöht und das Spiel im Getriebe reduziert werden. Die auszurichtenden Flächen können hochgenau positioniert werden. Vorzugsweise weisen beide Getriebe eine Stirnradstufe als Endstufe mit konischer Stirnradverzahnung auf und sind beide zugeordneten Wellen jeweils entlang ihrer Längsachse verstellbar. Insbesondere sind beide Getriebe vorzugsweise gleich aufgebaut.

Bei einer besonders bevorzugten Ausführungsform kann vorgesehen sein, dass die Welle über zumindest eine, vorzugsweise zumindest zwei, wenigstens teilweise (axial) relativ zur Welle verstellbare Lageranordnung(en) gelagert ist. Dadurch, dass die Lageranordnungen axial relativ zur Welle verstellbar sind, kann die axiale Position der Welle verändert werden, sodass das Zahnflankenspiel des Stirnradgetriebes reduziert werden kann. Die Lageranordnungen bleiben dabei vorzugsweise in derselben Position im Gehäuse der Zweiachsantriebsanordnung. Dies bedeutet, dass die Lageranordnungen axial auf der Welle verstellbar sind.

Gemäß einer Ausgestaltung der Erfindung kann vorgesehen sein, dass die zumindest eine Lageranordnung mittels Gleitlager oder Wälzlager, insbesondere Axial-Schrägnadellager, Kegelrollenlager oder Kombination aus Radial-Nadellager und Axial-Nadellager ausgeführt ist. Besondere Vorteile ergeben sich bei der Verwendung von Axial-Schrägnadellagern, bei denen zylindrische Rollen in einem Käfig schräg angeordnet sind. Diese Rollen weisen eine linienartige Anlage an Laufscheiben auf. Dadurch kann eine Lagerung ohne Spiel mit hoher Steifigkeit realisiert werden. Insbesondere kann die Lagerung spielfrei mit einer Vorspannung eingestellt werden.

Besonders vorteilhaft ist es in diesem Zusammenhang, wenn die Lageranordnung jeweils zwei Laufscheiben aus Stahl, insbesondere Federstahl, zwischen denen das Lager angeordnet ist, umfasst. Durch diese Maßnahme rollen die Rollen (Walzen) auf der Laufscheibe ab. Die Belastung wirkt daher auf die Laufscheiben und nicht auf das Gehäuse. Das Gehäuse kann daher aus einem weicheren Material, wie beispielsweise Aluminium, ausgebildet werden.

Eine besonders einfache, genaue und zuverlässige Verstellung der Lageranordnung ergibt sich, wenn die Lageranordnung einen Stellring aufweist, wobei die Welle ein Außengewinde und der Stellring ein Innengewinde aufweisen und der Stellring auf das Gewinde der Welle aufgeschraubt ist. So kann der Stellring einfach durch Drehen relativ zur Welle in axialer Richtung der Welle verstellt werden.

Bei einer alternativen Ausführungsform kann vorgesehen sein, dass die Welle eine Umfangsnut aufweist, in der ein Stützring angeordnet ist, an dem sich über eine oder mehrere Passscheiben (Stützscheiben) ein Lagerteil der Lageranordnung abstützt. Durch die Verwendung unterschiedlich dicker Stützscheiben oder unterschiedlicher Anzahlen von Stützscheiben kann das Lager bezüglich der Welle verstellt werden bzw. kann bei gleich bleibender Position des Lagers die Welle relativ zum Lager verstellt werden.

Gemäß einer Ausgestaltung der Erfindung kann ein Gehäuse vorgesehen sein, wobei in dem Gehäuse ein oder mehrere Lagersitze ausgebildet sind. Die Lagersitze können als Bestandteil der Lageranordnungen betrachtet werden. Durch die Lagersitze im Gehäuse wird eine Position der Lager im Gehäuse festgelegt. Vorzugsweise sind zwischen den Lagern und den Lagersitzen Laufscheiben vorgesehen. Grundsätzlich ist es denkbar, das Gehäuse einstückig auszubilden. Vorzugsweise ist jedoch jedem Getriebe ein Gehäuseteil zugeordnet und sind die Gehäuseteile miteinander verbunden, insbesondere miteinander verschraubt. Dadurch lässt sich eine Serienfertigung der Zweiachsantriebsanordnung besonders einfach realisieren.

Bei einer bevorzugten Ausführungsform kann vorgesehen sein, dass das gesamte Gehäuse drehbar angeordnet ist. Dadurch wird eine starre Anordnung ermöglicht. Beide Getriebe bzw. Teile beider Getriebe werden gemeinsam um die Azimutachse bewegt.

Eine bevorzugte Ausgestaltung der Erfindung zeichnet sich dadurch aus, dass zumindest eine Welle in einem Bereich ihres Umfangs eine konische Verzahnung aufweist oder ein Rad mit konischer Stirnradverzahnung drehfest an der Welle angeordnet ist. Je nachdem, welche Übersetzung notwendig ist, und welchen Durchmesser die Welle hat, wird die Stirnradverzahnung unmittelbar auf der Welle angebracht oder wird ein Rad mit einem im Vergleich zum Wellendurchmesser größeren Durchmesser verwendet, an dem die Stirnradverzahnung angebracht ist.

Vorteilhafterweise weist zumindest das eine Getriebe, vorzugsweise jedes Getriebe, eine Schneckengetriebestufe, vorzugsweise mit hoher Übersetzung, auf, wobei die Abtriebswelle eine konische Stirnradverzahnung aufweist. Dadurch lässt sich eine besonders hohe Genauigkeit, also exakte Ausrichtung der Flächen, erzielen.

Bei einer besonders bevorzugten Ausgestaltung der Erfindung kann vorgesehen sein, dass das zumindest ein Getriebe, vorzugsweise jedes Getriebe, eine erste und eine zweite Schneckengetriebestufe aufweist, wodurch Selbsthemmung entsteht. Aufgrund der Selbsthemmung kann eine vorgegebene Position exakt gehalten werden. Dabei kann die Position gehalten werden, ohne dass zusätzliche Bremsen notwendig wären. Vorzugsweise sind beide Getriebestufen in das Gehäuse integriert. Dadurch werden Kosteneinsparungen bei der Montage und der Fertigung ermöglicht.

Wenn Antriebsschnittstellen zur Anordnung der Antriebe vorgesehen sind, können Standardantriebe, insbesondere Standard-Getriebe-Motoren mit einer definierten Schnittstelle, einfach an dem Gehäuse angebracht, insbesondere angeflanscht, werden. Somit können je nach Bedarf unterschiedlich dimensionierte Antriebe an das Gehäuse angeschlossen werden.

Weitere Merkmale und Vorteile der Erfindung ergeben sich aus der nachfolgenden detaillierten Beschreibung von Ausführungsbeispielen der Erfindung anhand der Figuren der Zeichnung, die erfindungswesentliche Einzelheiten zeigt, sowie aus den Ansprüchen. Die einzelnen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

### Es zeigen:

- Fig. 1: eine perspektivische Ansicht des Gehäuses der Zweiachsantriebsanordnung;
- Fig. 2: eine Detailansicht einer konischen Stirnradverzahnung;
- Fig. 3: eine Draufsicht auf eine Welle und eine Stirnradgetriebestufe;
- Fig. 4: eine Schnittdarstellung durch einen Teil eines Getriebes und einer Welle;
- Fig. 5: eine vergrößerte Detaildarstellung der Fig. 4 im Bereich einer Lageranordnung;
- Fig. 6: eine alternative Ausführungsform für eine axiale Lagerverstellung; und
- Fig. 7: ein Blockdiagramm der an einer Zweiachsantriebsanordnung realisierten Antriebsstränge.

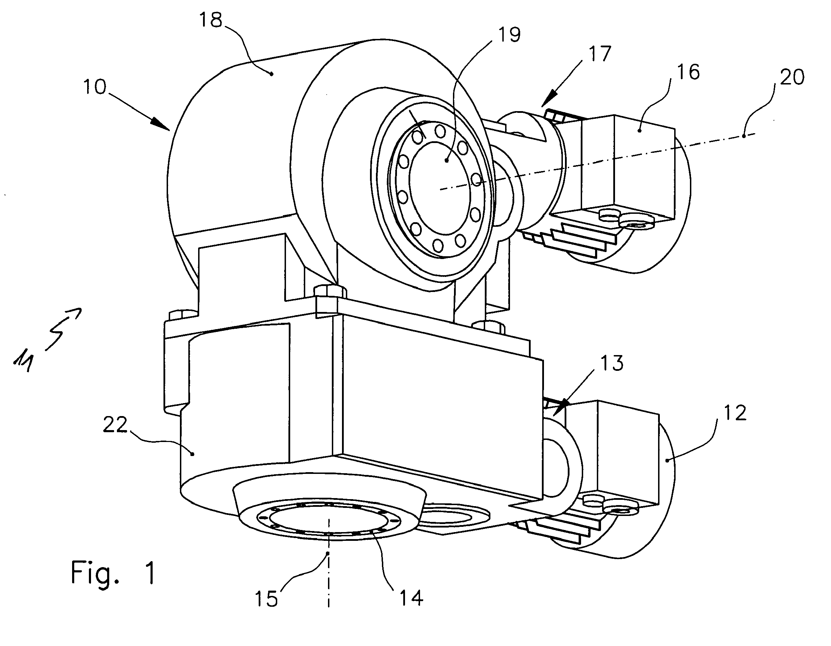

In der Fig. 1 ist das Gehäuse 10 der Zweiachsantriebsanordnung 11 gezeigt. Der Antrieb 12, der an eine Antriebsschnittstelle 13 angeflanscht ist, treibt eine Schneckenwelle einer ersten Schneckengetriebestufe an. Diese Schneckengetriebestufe treibt wiederum die Schneckenwelle einer zweiten Schneckengetriebestufe an, die wiederum über eine Stirnradgetriebestufe eine Welle 14 antreibt. Da die Welle 14 drehfest angeordnet ist, kann dadurch das Gehäuse 10 um die Azimutachse 15 verdreht werden.

Der Antrieb 16 ist ebenfalls an eine Antriebsschnittstelle 17 angeschlossen. Er treibt ebenfalls zwei Schneckengetriebestufen und eine Stirnradgetriebestufe an. Die im oberen Gehäuseteil 18 angeordnete Welle 19 wird dadurch angetrieben. Durch den Antrieb 16 kann somit eine Drehbewegung um die Elevationsachse 20 realisiert werden. Der obere Gehäuseteil 18 und der untere Gehäuseteil 22 sind miteinander verschraubt.

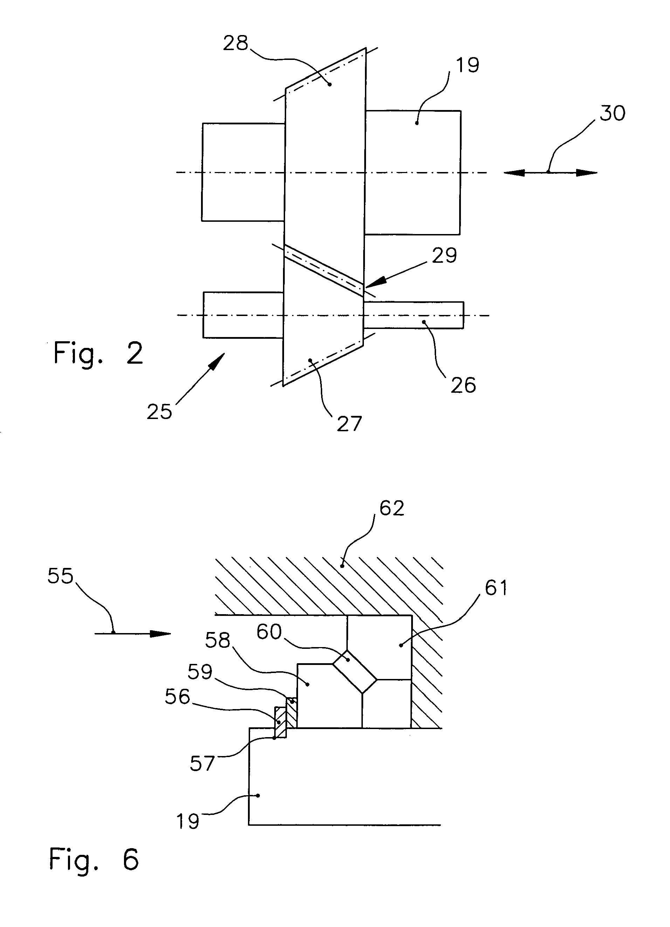

Die Fig. 2 zeigt ein konisches Stirnradgetriebe 25. Sowohl die Abtriebswelle 26 einer Schneckengetriebestufe als auch die Welle 19 weisen eine konische Stirnradverzahnung 27, 28 auf. Das Zahnflankenspiel 29 kann verändert werden, indem die Welle 19 in Doppelpfeilrichtung 30 bewegt wird. Je nachdem, in welche Richtung die Welle 19 verstellt wird, wird das Zahnflankenspiel 29 vergrößert oder verkleinert.

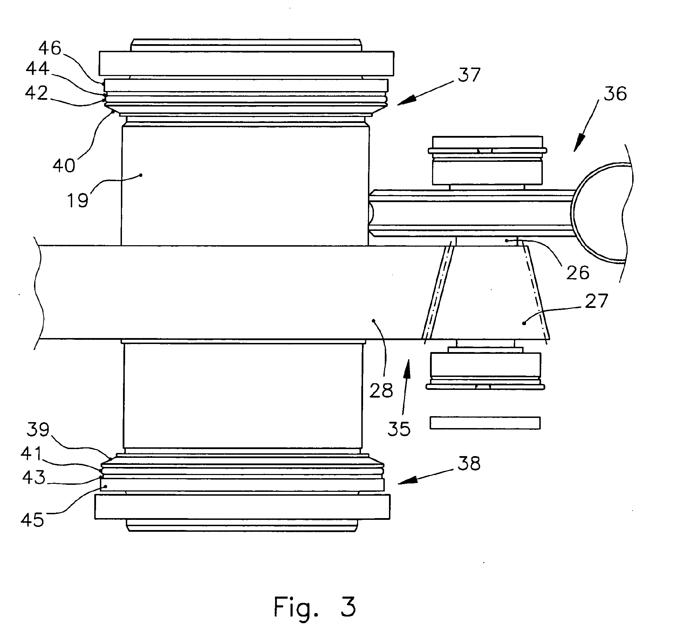

In der Fig. 3 ist eine Draufsicht auf eine Stirnradgetriebestufe 35 und eine vorgelagerte Schneckengetriebestufe 36 gezeigt. Die Stirnradgetriebestufe weist die Stirnradverzahnung 28 auf der Welle 19 und die Stirnradverzahnung 27 auf der Welle 26 auf. Die Welle 19 weist beidenends Lageranordnungen 37, 38 auf, die in axialer Richtung der Welle 19 verstellbar sind. Da die Lageranordnungen 37, 38 ortsfest in einem Gehäuse angeordnet sind, bewirkt eine Verstellung der Lageranordnungen 37, 38 in axialer Richtung der Welle 19 eine Verlagerung der Welle 19 in axialer Richtung, wodurch das Zahnflankenspiel 29 einstellbar ist. Die Lageranordnungen 37, 38 umfassen jeweils eine Laufscheibe 39, 40, ein Lager 41, 42, weitere Laufscheiben 43, 44 sowie einen Stellring 45, 46. Die Stellringe 45, 46 sind auf einem Gewinde der Welle 19 geführt und durch eine Drehbewegung in axialer Richtung der Welle 19 verstellbar. Die Lager 41, 42 sind zwischen den Laufscheiben 39, 43 bzw. 40, 44 angeordnet.

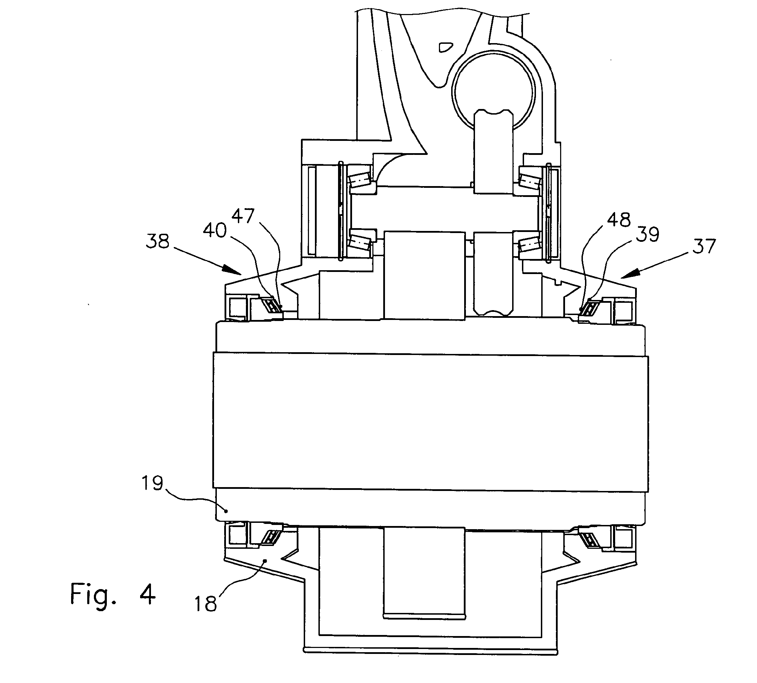

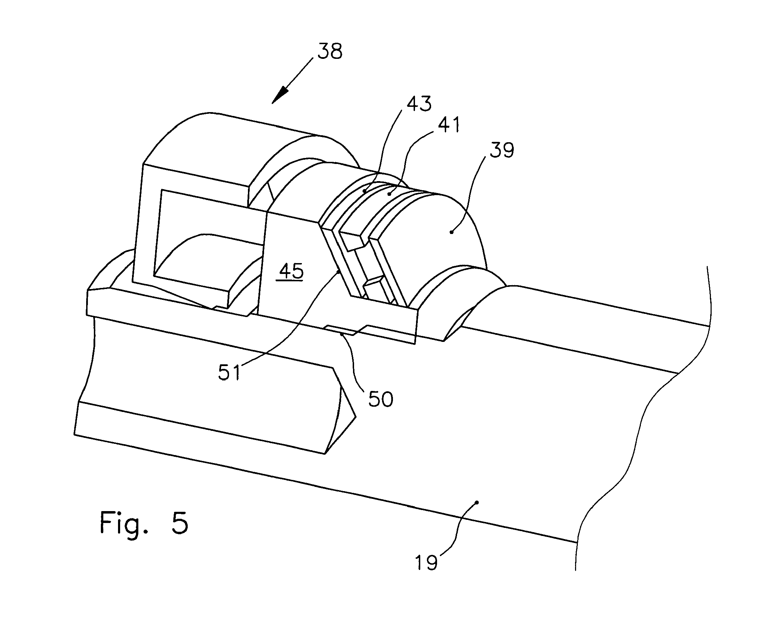

Die Fig. 4 zeigt eine Schnittdarstellung durch die Welle 19 und den oberen Gehäuseteil 18. Hier ist zu erkennen, dass sich die Lageranordnungen 37, 38 in Anlage an dem Gehäuse 18 befinden. Insbesondere liegen die Laufscheiben 39, 40 an entsprechenden Lagersitzen 47, 48 des Gehäuses 18 an. Die Lageranordnung 38 ist in einer vergrößerten Darstellung in der Fig. 5 abgebildet. Hier ist deutlich zu erkennen dass der Stellring 45 auf einem Gewinde 50 der Welle 19 geführt ist. Der Stellring 45 weist eine schräge Flanke 51 auf, an der die Laufscheibe 43 anliegt. Zwischen den Laufscheiben 43, 39 ist das Lager 41 angeordnet. Die ebenfalls schräg stehende Laufscheibe 39 liegt am hier nicht dargestellten Gehäuse an. Durch eine Verstellung des Stellrings 45 kann zum einen die Lageranordnung 38 in axialer Richtung der Welle 19 verstellt werden. Zum anderen kann das Lager 41 zwischen den Laufscheiben 39, 43 eingespannt werden. Bei dem Lager 41 handelt es sich um ein Axial-Schrägnadellager.

Die Fig. 6 zeigt eine alternative Ausführungsform einer Lageranordnung 55. Diese Lageranordnung umfasst einen Stützring 56, der in einer umlaufenden Nut 57 der Welle 19 sitzt. Zwischen der Laufscheibe 58 und der Stützscheibe 56 ist eine Passscheibe 59 angeordnet. Das Lager 60 stützt sich über die Laufscheibe 61 am Gehäuse 62 ab. Die axiale Verstellung der Welle 19 wird dadurch bewirkt, dass unterschiedlich dicke Passscheiben 59 oder eine unterschiedliche Anzahl von Passscheiben 59 verwendet werden.

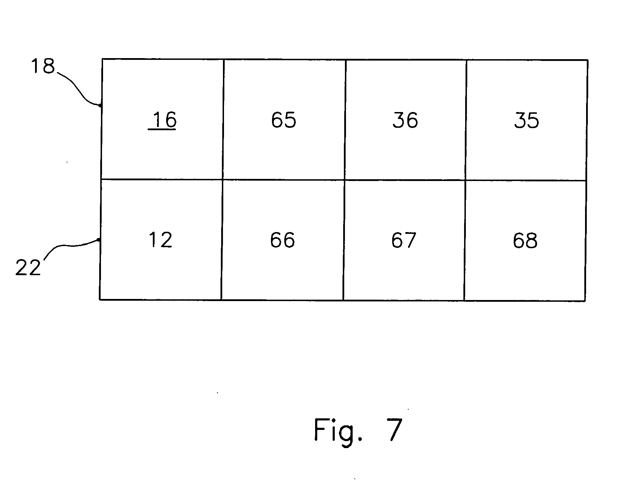

In der Fig. 7 ist schematisch der Aufbau der erfindungsgemäßen Zweiachsantriebsanordnung dargestellt. Im bzw. am oberen Gehäuseteil 18 ist der Antrieb 16 vorgesehen, der eine erste Schneckengetriebestufe 65 antreibt. Diese treibt wiederum die zweite Schneckengetriebestufe 36 an, die wiederum mit der Stirnradgetriebestufe 35 zum Antrieb der Welle 19 zusammenwirkt. In analoger Weise ist im oder am unteren Gehäuseteil 22 der Antrieb 12 angeordnet, der mit einer ersten Schneckengetriebestufe 66 zusammenwirkt, die wiederum eine zweite Schneckengetriebestufe 67 antreibt. Die zweite Schneckengetriebestufe 67 wirkt wiederum mit einer Stirnradgetriebestufe 68 zum Antrieb der Welle 14 zusammen. Die Getriebestufen 65, 36 und 35 bilden ein erstes Getriebe und die Getriebestufen 66, 67 und 68 bilden ein zweites Getriebe.

## Patentansprüche

1. Zweiachsantriebsanordnung (10) zum Halten und Bewegen von Sonnenlicht absorbierenden, bündelnden oder reflektierenden Flächen um eine Azimutachse (15) und eine Elevationsachse (20), wobei ein erstes durch einen ersten Antrieb (12) angetriebenes Getriebe für eine Drehbewegung um die Azimutachse (15) und ein zweites durch einen zweiten Antrieb (16) angetriebenes Getriebe für eine Drehbewegung um die Elevationsachse (20) vorgesehen sind, **dadurch gekennzeichnet, dass** zumindest eines der Getriebe eine Stirnradgetriebestufe (25, 35) mit konischer Stirnradverzahnung (27, 28) aufweist und eine zugeordnete Welle (14, 19) entlang ihrer Längsachse verstellbar ist.

2. Zweiachsantriebsanordnung nach Anspruch 1, **dadurch gekennzeichnet, dass** die Welle (14, 19) über zumindest eine, vorzugsweise zumindest zwei, wenigstens teilweise (axial) relativ zur Welle (14, 19) verstellbare Lageranordnung (37, 38, 55) gelagert ist.

3. Zweiachsantriebsanordnung nach Anspruch 2, **dadurch gekennzeichnet, dass** die zumindest eine Lageranordnung (37, 38, 55) mittels Gleitlager oder Wälzlager, insbesondere Axial-Schrägnadellager, Kegelrollenlager oder Kombination aus einem Radial-Nadellager und einem Axial-Nadellager, ausgeführt ist.

4. Zweiachsantriebsanordnung nach Anspruch 2 oder 3, **dadurch gekennzeichnet, dass** die Lageranordnung (37, 38, 55) jeweils zwei Laufscheiben aus Stahl (39, 40, 43, 44, 58, 61), zwischen denen das Lager (41, 42, 60) angeordnet ist, umfasst.

5. Zweiachsantriebsanordnung nach einem der vorhergehenden Ansprüche 2 bis 4, **dadurch gekennzeichnet, dass** die Lageranordnung (37, 38) einen Stellring (45, 46) aufweist, wobei die Welle (14, 19) ein Außengewinde (50) und der Stellring ein Innengewinde aufweisen und der Stellring (45, 46) auf das Gewinde (50) der Welle (14, 19) aufgeschraubt ist.

6. Zweiachsantriebsanordnung nach einem der vorhergehenden Ansprüche 2 bis 4, **dadurch gekennzeichnet, dass** die Welle (14, 19) eine Umfangsnut (57) aufweist, in der ein Stützring (56) angeordnet ist, an dem sich über eine oder mehrere Passscheiben (59) ein Lagerteil der Lageranordnung (55) abstützt.

7. Zweiachsantriebsanordnung nach einem der vorhergehenden Ansprüche 2 bis 6, **dadurch gekennzeichnet, dass** ein Gehäuse (11) vorgesehen ist und in dem Gehäuse (11) ein oder mehrere Lagersitze (47, 48) ausgebildet sind.

8. Zweiachsantriebsanordnung nach einem der vorhergehenden Ansprüche, **dadurch gekennzeichnet, dass** zumindest eine Welle (14, 19) in einem Bereich ihres Umfangs eine konische Verzahnung aufweist oder ein Rad mit konischer Stirnradverzahnung (28) drehfest an der Welle angeordnet ist.

9. Zweiachsantriebsanordnung nach einem der vorhergehenden Ansprüche, **dadurch gekennzeichnet, dass** das zumindest eine Getriebe eine Schneckengetriebestufe (36, 67) aufweist, wobei die Abtriebswelle (26) eine konische Stirnradverzahnung (27) aufweist.

10. Zweiachsantriebsanordnung nach einem der vorhergehenden Ansprüche, **dadurch gekennzeichnet, dass** das zumindest eine Getriebe eine erste und zweite Schneckengetriebestufe (65, 36, 66, 67) aufweist, wodurch Selbsthemmung erreicht werden kann.

11. Zweiachsantriebsanordnung nach einem der vorhergehenden Ansprüche, **dadurch gekennzeichnet, dass** Antriebsschnittstellen (13, 17) zur Anordnung der Antriebe (12, 16) vorgesehen sind.
